Europäisches Patentamt

European Patent Office

Office européen des brevets

(19)

(11) Publication number: **0 109 858**
**B1**

# EUROPEAN PATENT SPECIFICATION

(12)

(45) Date of publication of patent specification: **13.05.87**

(51) Int. Cl.⁴: **B 64 C 9/10**

(21) Application number: **83307121.0**

(22) Date of filing: **22.11.83**

(54) Aircraft flying control systems.

(30) Priority: **23.11.82 GB 8233356**

(43) Date of publication of application:
**30.05.84 Bulletin 84/22**

(45) Publication of the grant of the patent:
**13.05.87 Bulletin 87/20**

(84) Designated Contracting States:
**DE FR NL**

(56) References cited:
**FR-A-1 106 318**
**GB-A- 555 635**
**US-A-2 113 000**
**US-A-2 395 671**
**US-A-2 623 717**
**US-A-3 363 862**
**US-A-3 790 108**
**US-A-4 171 113**

(73) Proprietor: **BRITISH AEROSPACE PUBLIC LIMITED COMPANY**
**11 Strand**
**London WC2N 5JT (GB)**

(72) Inventor: **Stableford, William Ernest British Aerospace PLC**
**Aircraft Group Woodford Aerodrome Chester Road**
**Woodford Cheshire, SK7 1QR (GB)**

(74) Representative: **Saul, David Jonathan et al**
**British Aerospace plc Corporate Patents Dept.**
**Brooklands Road**
**Weybridge Surrey KT13 0SJ (GB)**

Courier Press, Leamington Spa, England.

## Description

This invention relates generally to aircraft having flying control systems of the type having control surface means carrying tab means capable of pivotal displacement relative to the control surface means.

Such tab means are provided for trim purposes, that is to say, they are pivotally displaceable to cause the control surface means to maintain a desired pivotal position selected to trim the aircraft without feeding back forces to the pilot's manual control means, so that in effect the aircraft can be flown "hands-off".

Additionally, the tab means are provided for balance purposes, that is to say, to reduce the effort required to operate the control surface means by displacing the tab oppositely to control surface displacement.

Irrespectively, it is possible to use the tab means as a servo tab, assuming the means effecting pivotal displacement of the control surface is not irreversable, that is to say, pivotal displacement of the tab means is used to produce forces which effect pivotal displacement of the control surface means.

More specifically, the invention relates to aircraft having flight control systems of the type described but further including both a pilot's manually operable control means and a pilot's manually operable trim means, control linkage means for effecting pivotal displacement of the control surface means in response to a pilot's control demand, and trim linkage means for effecting pivotal displacement of the tab means with respect to the control surface means in response to a pilot's trim demand as known e.g. from US—A—2623717 from US—A—4171113.

It is thought possible that, however unlikely, a jam is possible preventing adequate control movement of the control surface means by the control linkage means; it is thus an objective of the present invention to provide an arrangement wherein flight control of the aircraft can be maintained despite such a jam.

According to the present invention, an aircraft having a flying control system includes control surface means, carrying tab means capable of pivotal displacement relative to the control surface means, control linkage means for effecting pivotal displacement of the control surface means in response to a pilot's control demand, trim linkage means for effecting pivotal displacement of the tab means with respect to the control surface means in response to a pilot's trim demand characterised in that compensation means are provided interconnecting the two linkage means whereby should a jam occur rendering that part of the control linkage between a pilot and the compensation means immovable or insufficiently movable to effect control, pivotal displacement of the control surface means for control purposes can be effected by way of the trim linkage means, the compensation means allowing displacement of the control surface means relative to the immovable portion of the control linkage means.

Some embodiments of the invention are described by way of example with reference to the accompanying drawings in which:—

Figure 1 is a diagrammatic representation of an existing aircraft control system,

Figure 2 is a similar representation of a modified aircraft control system, and

Figure 3 is a representation of an alternative arrangement of that region of Figure 2 to the right of lines III—III in two operational positions.

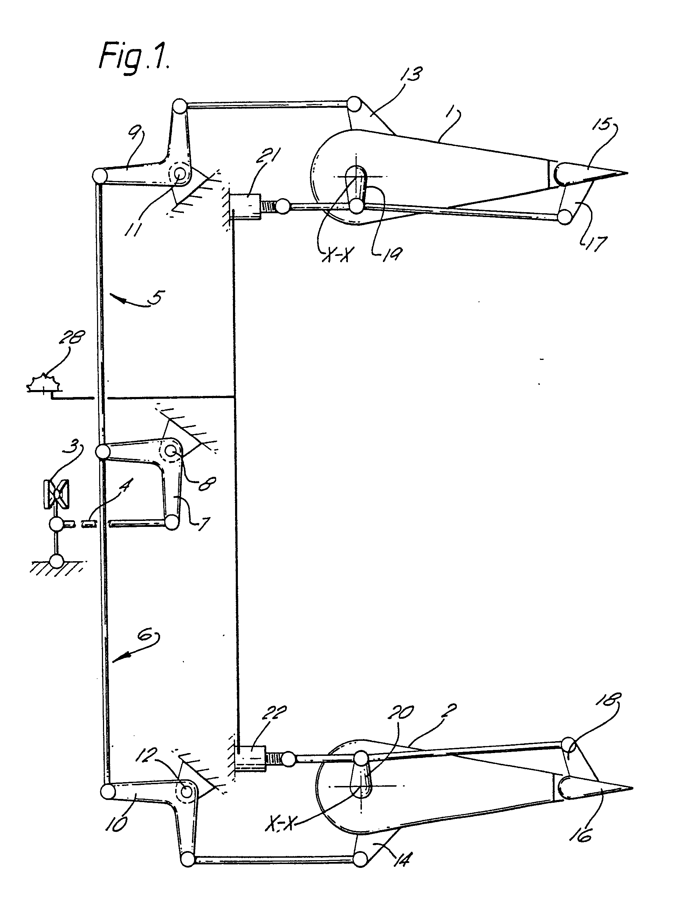

Referring to Figure 1, an aircraft flying control system has flying control means in the form of twin elevator surfaces 1 and 2 hinged about common laterally extending axes X—X. Pivotal displacement about these axes for control in the pitch sense is effected by a pilot's manual control means in the form of a column 3 via control linkage means in the form of a single channel linkage 4 and twin channel linkages 5 and 6. The linkage 4 is connected to the linkages 5 and 6 by means of a bell crank 7 anchored at its pivot axis at 8 to the aircraft structure. The twin linkage channels include bell cranks 9 and 10 respectively, anchored at their pivot axes at 11 and 12 respectively, to the aircraft structure. To effect displacement of the control surfaces 1 and 2 in unison from a single input, the bell cranks 9 and 10 are coupled to control horns 13 and 14 attached respectively to upper and lower regions of the control surfaces 1 and 2.

The control surfaces 1 and 2 carry pivotally mounted tabs 15 and 16 respectively. These are connected by tab horns 17 and 18 and links to lever arms 19 and 20 respectively, and by further links to screw jacks 21 and 22 respectively. The lever arms 19 and 20 freely swing about the X—X axes, whilst the screw jacks 21 and 22 are, in effect, trim actuators operated in response to a pilot's trim demand input at the pilot's manual trim control 28.

Items 17 and 18, 19 and 20, 21 and 22 are included in the tab linkage means to which reference has previously been made — they form a geared tab arrangement.

In operation an easing back of the pilot's control column 3 moves the bell crank 7 anticlockwise, as drawn, the bell cranks 9 and 10 also anticlockwise, so that the surfaces 1 and 2 both pivot upwards (i.e. anticlockwise) in unison.

Assuming the screw jacks 21, 22 are fixed, the geared tab arrangement ensures that as the surfaces 1 and 2 are pivotally displaced, their associated tabs 15 and 16 respectively, are relatively pivotally displaced in the opposite sense thus reducing the input effort required from the pilot.

To effect aircraft trimming, the pilot moves his control column 3 to give a control surface 1 and 2 pivotal displacement in which the aircraft adopts a desired flight attitude in the pitch sense. He then actuates the trimming screw jacks 21, 22 so that the tabs are pivotally displaced sufficiently to maintain said control surface displacement in which situation the aircraft can be flown "hands-off".

With the described arrangement, it is thought possible that a jam at the pilot's control column 3 or in the control linkage means could prevent operation of the control surface means.

Additionally, and as a separate matter, it is thought that in the twin surface embodiment illustrated the non-yielding interconnection between the two otherwise independent surfaces 1 and 2, could cause both surfaces to become immovable even though only one became jammed.

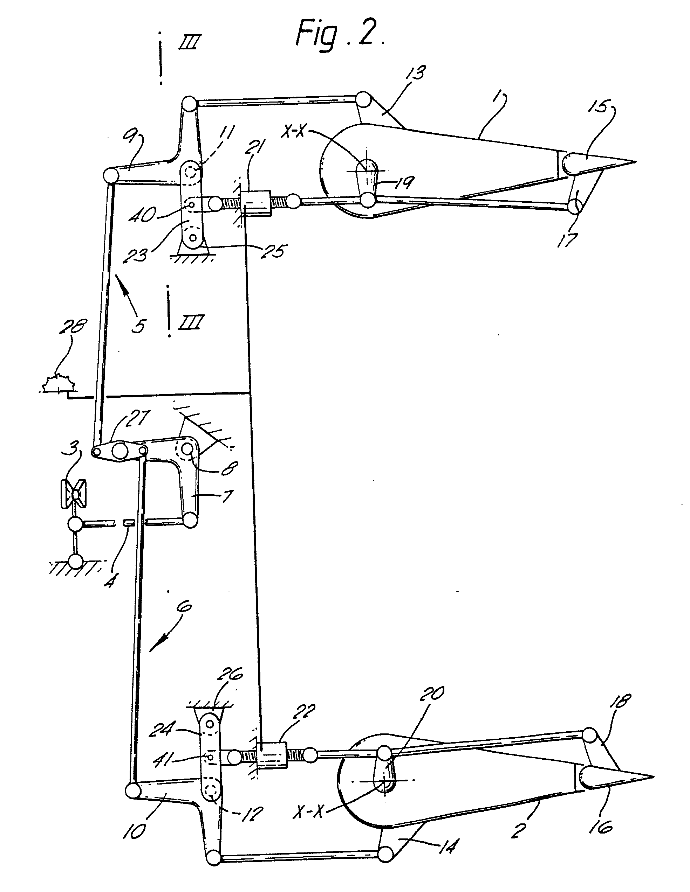

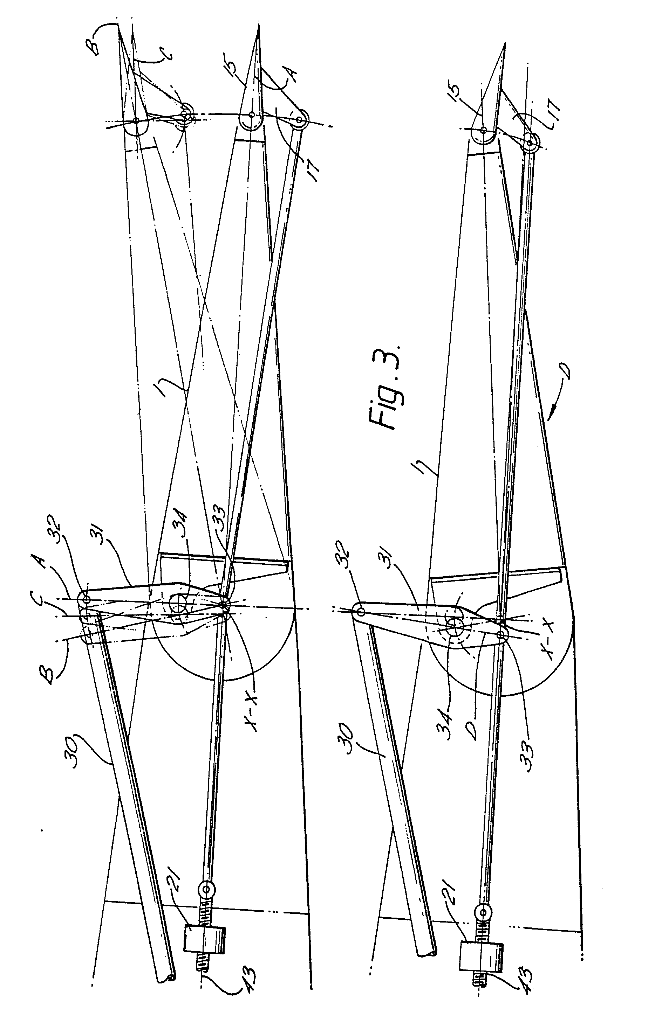

The embodiments of Figure 2 is provided to remedy these jamming problems. Like reference numerals refer to like components.

If the pilot's control column 3 or the control linkage means becomes jammed, thereby preventing control surface displacement, then it is arranged, in the embodiment of Figure 2, that the trim actuators (the screw jacks 21 and 22) which are controllable by the pilot are operated to displace the tabs 15 and 16 and thus effect control surface displacement.

To allow this operation, the screw jacks 21 and 22 and the bell cranks 9 and 10 respectively, are provided with compensation means. These compensation means are in the form of pivot links 23 and 24, respectively, which pivotally carry at one end the bell cranks 9 and 10 both for pivotal movement about their axes 11 and 12 respectively, and for bodily movement with respect to the aircraft. The links are respectively pivotally mounted at a further end upon the aircraft structure at 25 and 26 respectively. The movable members of the screw jacks 21 and 22 are respectively pivotally connected to the links 23 and 24 at 40 and 41, at points intermediate the ends of the link. Thus operation of the screw jacks 21 and 22 by the pilot in addition to also displacing the tabs 15 and 16 also displaces the pivots of the bell cranks 9 and 10 by a complementary amount such that displacement of the surfaces 1 and 2 respectively (the tabs are now functioning as classic servo tabs) does not significantly need to move those parts of the control linkage means upstream of the bell cranks 9 and 10. Thus if these parts are jammed, they do not prevent servo tab operated displacement of the surfaces 1 and 2.

To prevent the possibility of one elevator surface 1 or 2 becoming jammed and therefore also jamming the other surface 2 or 1, a double-armed differential member 27 is arranged to be pivotally carried by that arm of the bell crank 7 originally coupled to the twin control channels 5 and 6. One control channel is pivoted to one arm of the member 27 whilst the other control channel is pivoted to the other. Thus one surface 1 or 2 can operate independently of the other any differential movement being accommodated by rotational movement of the differential member 27.

The embodiment of Figure 3 provides an alternative to that arrangement to the right of Line III—III of Figure 2. It effectively integrates the control linkage means, the trim linkage means, and the compensation means to provide a simplified mechanism. This embodiment, as drawn, does not operate as a geared tab arrangement, but it can be readily adjusted to do so.

A surface 1 is hinged for pivotal displacement about a laterally extending axis X—X. The surface 1 carries a tab 15 connected by a tab horn 17 and links to a screw jack 21. The screw jack is, in effect, a trim actuator.

The surface 1 is connected by way of a control linkage shown generally at 30 to a pilot's manually operable control, for example that shown in Figures 1 and 2 at 3.

The tab actuator 21 is connected to a manually operable trim control wheel, for example, that shown in Figures 1 and 2 at 28.

The control linkage 30 has compensation means in the form of a lever 31 having a first end pivot position 32 which is displaced in response to a pilot's control demands input at 3, and a second end pivot position 33 which is displaced in response to a pilot's trim demand input at 28. Changing the length of the lever 31 so that the end pivot position 33 is displaced from the X—X axis causes the tab 15 to operate as a geared tab. The rocking lever is pivoted, at a third position 34 intermediate the two ends, to a point on the control surface spaced from the axis X—X. The rocking lever is thus carried by the control surface; it is pivotally connected at its first end to a member of the control linkage and at its second end to the trim linkage.

In normal usage, the second end 33 is temporarily anchored by the trim linkage and the actuator 21 so that a pilot's control demand rocks the lever either clockwise or anticlockwise about its second end. Naturally, this causes the intermediate position 34 to effect a corresponding pivotal control displacement of the surface 1.

If this displacement is to be trimmed, then a trim demand by the pilot causes the actuator 21 to pivotally displace the tab 15 with respect to the control surface via the trim linkage. By virtue of the connection with the second end 33 of the rocking lever such trim movement of the trim linkage rocks the lever about the position 34 and thus moves the control linkage as a whole back towards the original condition before the pilot's control demand was inserted.

In an emergency situation, where that part of the control linkage upstream of the rocking lever 31 is jammed thereby locking the first end 32 of the lever, aircraft flight control can be maintained by the pilot via his trim control 28 and the trim linkage and tab. The tab 15 in this case operates as a servo tab, pivotal displacement of the tab 15 effecting control surface displacement in an opposite sense. This displacement of the control surface is accommodated by the rocking lever since it swings about its first end in response to trim linkage movement.

The system positions referenced by reference letters illustrate respectively:—

A — the system aligned on that wing chord line referenced 43, that is to say undisplaced.

B — the surface 1 displaced by the control linkage 30 in normal use. As drawn, the tab 15 is not being oppositely displaced to effect reduced control effort, i.e. the tab is not operating as a geared tab, but if, as previously discussed, the lever 31 has its length changed gearing can be effected.

C — the surface 1 trimmed to reduce feedback forces to the pilot by the trim linkage and the actuator 21 in normal use.

D — the control linkage 30 upstream of the rocking lever 31 jammed and the surface 1 displaced by the trim linkage and the actuator 21. The tab 15 is now operating as a servo tab. The control surface displacement is accommodated by rocking of lever 31 about its first end 32.

## Claims

1. An aircraft having a flying control system including control surface means (1), carrying tab means (15, 16) capable of pivotal displacement relative to the control surface means, control linkage means (4, 5, 6) for effecting pivotal displacement of the control surface means in response to a pilot's control demand, trim linkage means (19, 20, 21, 22) for effecting pivotal displacement of the tab means with respect to the control surface means in response to a pilot's trim demand characterised in that compensation means (23, 24, 31, 32, 33, 34) are provided interconnecting the two linkage means whereby should a jam occur rendering that part of the control linkage between a pilot and the compensation means immovable or insufficiently movable to effect control, pivotal displacement of the control surface means for control purposes can be effected by way of the trim linkage means, the compensation means allowing displacement of the control surface means relative to the immovable portion of the control linkage means.

2. An aircraft having a flying control system according to Claim 1, wherein said compensation means include lever means (23, 24, 31), pivot means located at three spaced positions thereon, a first pivot position (11, 12; 32) at which said lever means is pivotally connected to the control linkage means, a second pivot position (40, 41; 33) at which said lever means is pivotally connected to the trim linkage means, and a third pivot position (25, 26; 34) at which said lever means is pivotally connected to an anchorage, the arrangement being such that movement of the trim linkage means effects compensatory pivotal displacement of the lever means; thereby allowing pivotal displacement of the control surface means for control purposes.

3. An aircraft having a flying control system according to Claim 2, in which the first pivot position (11, 12) is located towards one end of the lever (23, 24), the third pivot position (25, 26) is located towards a further end of the lever, and the second pivot position (40, 41) is located between said first and third positions, in which the control linkage includes bell crank means (9, 10) pivotal movement of which about its fulcrum transmits control movement to the control surface means, the first pivot position (11, 12) is arranged to carry said fulcrum, and in which the third pivot position (25, 26) anchors the lever to the aircraft structure.

4. An aircraft having a flying control system according to Claim 2, in which the first pivot position (32) is located towards one end of the lever (31), the second pivot position (33) is located towards a further end of the lever, and the third pivot position (34) is located between said first and second positions, and in which the third pivot position (34) anchors the lever to the control surface means (1).

## Patentansprüche

1. Flugzeug mit einem Flugsteuersystem, welches Ruderflächen (1) aufweist, die Trimmglieder (15, 16) besitzen, die gegenüber den Ruderflächen verschwenkbar sind, wobei ein Steuergestänge (4, 5, 6) eine Schwenkbewegung der Ruderflächen gemäß einem Flugzeugführer-Steuerbefehl bewirkt und ein Trimmgestänge (19, 20, 21, 22) vorgesehen ist, um eine Schwenkbewegung der Trimmglieder gegenüber den Ruderflächen gemäß einem Flugzeugführer-Trimmbefehl durchzuführen, dadurch gekennzeichnet, daß Kompensationsglieder (23, 24, 31, 32, 33, 34) vorgesehen sind, um die beiden Gestänge derart zu verbinden, daß beim Auftreten einer Verklemmung, wodurch jener Teil des Steuergestänges zwischen Flugzeugführer und Kompensationseinrichtung unbeweglich oder ungenügend beweglich wird, um eine Steuerung durchzuführen, eine Verschwenkung der Ruderflächen zu Steuerzwecken durch das Trimmgestänge bewirkt werden kann, wobei die Kompensationsglieder eine Versetzung der Ruderflächen relativ zu dem unbeweglichen Teil des Steuergestänges erlauben.

2. Flugzeug mit einem Flugsteuersystem nach Anspruch 1, bei welchem die Kompensationsglieder eine Hebelanordnung (23, 24, 31) aufweisen, wobei Schwenkanordnungen an drei im Abstand zueinander liegenden Stellen angeordnet sind und an einer ersten Schwenkstellung (11, 12; 32) die Hebelanordnung schwenkbar mit dem Steuergestänge verbunden ist, an einer zweiten Schwenkstelle (40, 41; 33) die Hebelanordnung schwenkbar an dem Trimmgestänge angeschlossen ist und an einer dritten Schwenkstellung (25, 26; 34) der Hebel schwenkbar an einer Verankerung angelenkt ist, wobei die Anordnung derart getroffen ist, daß eine Bewegung des Trimmgestänges eine kompensierende Schwenkversetzung der Hebelanordnung bewirkt, wodurch die Steuerruderflächen zum Zwecke der Steuerung verschwenkbar sind.

3. Flugzeug mit einem Flugsteuersystem nach Anspruch 2, bei welchem die erste Schwenkstellung (11, 12) nach dem einen Ende des Hebels (23, 24) hin angeordnet ist, die dritte Schwenkstellung (25, 26) nach einem weiteren Ende des Hebels hin angeordnet ist, während die zweite Schwenkstel-.

lung (40, 41) zwischen der ersten und dritten Stellung liegt, wobei das Steuergestänge Winkelhebel (9, 10) aufweist, deren Schwenkbewegung um ihre Schwenkachse die Steuerbewegung auf die Ruderoberflächen überträgt, und wobei die erste Schwenkstellung (11, 12) so angeordnet ist, daß die Drehachse getragen wird, und wobei die dritte Schwenkstellung (25, 26) den Hebel am Flugzeugaufbau verankert.

4. Fluzeug mit einem Flugsteuersystem nach Anspruch 2, bei welchem die erste Schwenkstellung (32) nach dem einen Ende des Hebels (31) hin angeordnet ist, die zweite Schwenkstellung (33) nach einem weiteren Ende des Hebels angeordnet ist und die dritte Schwenkstellung (34) zwischen der ersten und zweiten Schwenkstellung liegt, wobei die dritte Schwenkstellung (34) den Hebel an dem Steuerruder (1) verankert.

**Revendications**

1. Avion comportant un dispositif de commande de vol comprenant un moyen de gouverne (1), supportant un moyen de volet (15, 16) capable de se déplacer par pivotement par rapport au moyen de gouverne, un moyen de biellette de commande (4, 5, 6) pour effectuer le déplacement piar pivotement du moyen de gouverne en réponse à une demande de commande d'un pilote, un moyen de biellette d'équilibrage (19, 20, 21, 22) pour effectuer un déplacement par pivotement du moyen de volet par rapport au moyen de gouverne en réponse à une demande d'équilibrage d'un pilote, caractérisé en ce qu'un moyen de compensation (23, 24, 31, 32, 33, 34) est prévu qui relie les deux moyens de biellette, d'où il résulte qu'en cas de coincement rendant la partie de la biellette de commande entre un pilote et le moyen de compensation immobile ou insuffisamment mobile pour effectuer la commande, le déplacement en pivotement du moyen de gouverne à des fins de commande peut s'effectuer par l'intermédiaire du moyen de commande d'équilibrage, le moyen de compensation permettant le déplacement du moyen de gouverne par rapport à la partie mobile du moyen de biellette de commande.

2. Avion comportant un dispositif de commande de vol selon la revendication 1, dans lequel le moyen de compensation comprend des moyens de levier (23, 24, 31), des moyens de pivot situés à trois positions espacées au-dessus, une première position de pivotement (11, 12; 32) à laquelle le moyen de levier est relié en pivotement au moyen de biellette de commande, une seconde position de pivotement (40, 41; 33) à laquelle le moyen de levier est relié en pivotement au moyen de biellette d'équilibrage, une troisième position de pivotement (25, 26; 34) à laquelle le moyen de levier est relié en pivotement à un ancrage, l'agencement étant tel que le mouvement du moyen de biellette d'équilibrage provoque un déplacement en pivotement compensatoire du moyen de levier, permettant ainsi le déplacement en pivotement du moyen de gouverne à des fins de commande.

3. Avion comportant un dispositif de commande de vol selon la revendication 2, dans lequel la première position de pivotement (11, 12) est située vers une extrémité du levier (23, 24), Is troisième position de pivotement (25, 26) est située vers l'autre extrémité du levier, et la seconde position de pivotement (40, 41) est située entre les première et troisième positions, dans lequel la biellette de commande comporte un moyen de biellette coudée (9, 10) dont le mouvement de pivotement autour de son point d'appui transmet le mouvement de commande au moyen de gouverne, la première position de pivotement (11, 12) est agencée de manière à supporter le point d'appui, et dans lequel la troisième position de pivotement (25, 26) ancre le levier à la structure de l'avion.

4. Avion comportant un dispositif de commande de vol selon la revendication 2, dans lequel la première position de pivotement (32) est située vers une extrémité du levier (31), la seconde position du pivotement (33) est située vers l'autre extrémité du levier et la troisième position de pivotement (34) est située entre les première et seconde positions, et dans lequel la troisième position de pivotement (34) ancre le levier au moyen de gouverne (1).

Fig.1.

Fig. 2.

Fig. 3.